## Europäisches Patentamt

## European Patent Office

## Office européen des brevets

(19)

(11) Veröffentlichungsnummer: **0 031 000**
**B1**

(12) **EUROPÄISCHE PATENTSCHRIFT**

(45) Veröffentlichungstag der Patentschrift:
27.10.82

(51) Int. Cl.³: **B 60 P 1/44**

(21) Anmeldenummer: **80105592.2**

(22) Anmeldetag: **18.09.80**

(54) **Ladevorrichtung für Lastfahrzeuge.**

(30) Priorität: **18.12.79 DE 2950852**

(43) Veröffentlichungstag der Anmeldung:
**01.07.81 Patentblatt 81/26**

(45) Bekanntmachung des Hinweises auf die Patenterteilung:
**27.10.82 Patentblatt 82/43**

(84) Benannte Vertragsstaaten:
**AT BE FR LU NL**

(56) Entgegenhaltungen:
**FR-A-1 407 469**
**FR-A-2 288 012**

(73) Patentinhaber: **Vereinigte Flugtechnische Werke GmbH, Hünefeldstrasse 1-5, D-2800 Bremen (DE)**

(72) Erfinder: **Knobling, Manfred, Ing. grad., Karl-Grunert-Strasse 2, D-2800 Bremen (DE)**
Erfinder: **Rudolph, Klaus, Ing. grad., Langeooger Platz 5, D-2800 Bremen 1 (DE)**

(74) Vertreter: **Bischof, Hans-Jochen, Postfach 10 78 45, D-2800 Bremen 1 (DE)**

## Ladevorrichtung für Lastfahrzeuge

Die Erfindung bezieht sich auf eine Ladevorrichtung für Lastfahrzeuge mit einem steuerbaren hydraulischen Antrieb zum Heben, Senken, Öffnen und Schließen der Ladebrücke sowie mit einer von an der Ladebrücke vorgesehenen Quecksilberschaltern beeinflußbaren Steuerschaltung zur Niveauregelung der Ladebrücke. Eine solche Vorrichtung ist z. B. aus der FR-A-2 288 012 bekannt.

Bei Lastfahrzeugen ist es bekannt, zum Heben und Senken des Ladegutes vom Erdboden zur Ladefläche des Fahrzeugs und umgekehrt Ladevorrichtungen zu benutzen. Hierfür wird in der Regel die Heckklappe eines Lastfahrzeugs benutzt, welche als Ladebrücke oder Ladebordwand mit Hilfe eines hydraulischen Antriebs und einer Steuervorrichtung die gewünschten Hub- und/oder Kippbewegungen durchführt. Eine solche Ladebrücke ist in der Regel auch in der Lage, am Boden durch Kippen schräg nach unten geneigt zu werden, um das Aufbringen des Ladegutes bzw. das Abrollen zu erleichtern.

Zum Antrieb derartiger Ladevorrichtungen werden, wie bereits erwähnt, hydraulische Stellglieder eingesetzt, die über Ventile von einer Hydraulikpumpe versorgt werden. Die Hydraulikpumpe wird hierbei von einem Elektromotor angetrieben, der von einer Steuerschaltung, welche auch zur Steuerung der Ventile dient, gesteuert wird. Durch Ein- und Abschalten des Motors sowie Umschaltung der Ventile ist es möglich, den jeweils gewünschten Stellzylinder zum Heben/Senken oder Öffnen/Schließen an die hydraulische Versorgung zu schalten.

Neben dieser Steuerung sind in jüngster Zeit auch automatische Steuereinrichtungen bekanntgeworden, welche mit Hilfe von Quecksilberschaltern eine sogenannte Niveauregelung vornehmen. Hierbei liefern die in der Ladebrücke eingesetzten Quecksilberschalter lageabhängige Schaltbefehle, welche beim Heben z. B. den anfänglichen Kippvorgang beenden und den Hubvorgang einleiten. Bei derartigen Steuerschaltungen besteht aber das Problem der Einstellung, weil die Schaltbefehle aufgrund unterschiedlicher Einsatzforderungen an unterschiedlichen Stellungen der Ladebrücke ausgelöst werden sollen. Außerdem können Schwierigkeiten entstehen, und zwar durch zu frühes Auslösen von Schaltbefehlen bzw. durch Abfallen von Schaltbefehlen und damit die Steuerung stören. Da sich solche Störungen wegen der beim Laden bzw. Entladen auftretenden Erschütterungen einerseits nicht vermeiden lassen und die Einstellung der Quecksilberschalter andererseits problematisch ist, gelten diese Steuerschaltungen als unbefriedigend.

Der Erfindung liegt daher die Aufgabe zugrunde, eine Steuerschaltung für eine Ladevorrichtung der eingangs genannten Art vorzusehen, die sich für die verschiedensten Einsatzforderungen einstellen läßt und ein funktionssicheres Laden bzw. Entladen gewährleistet. Diese Aufgabe wird dadurch gelöst, daß erfindungsgemäß die Quecksilberschalter mit weitem Bereich lageverstellbar angeordnet sind und daß ein Quecksilberschalter mit seinem lageabhängigen Schaltbefehl eine mit einer Selbsthaltefunktion versehene Schaltstufe zur Umschaltung eines im hydraulischen Antrieb vorgesehenen Ventils ansteuert, wobei jeweils nur der erste Schaltbefehl des Quecksilberschalters den hydraulischen Antrieb ansteuert und weitere Schaltungen des Quecksilberschalters ohne Einfluß auf die Steuerschaltung bleiben.

Die erfindungsgemäße Maßnahme hat den Vorteil, die Auslösung der Schaltbefehle in den jeweils gewünschten Stellungen der Ladebrücke leicht einstellen zu können, wobei der jeweils erste Schaltbefehl eines Quecksilberschalters durch die Selbsthaltefunktion der angesteuerten Schaltstufe die gewünschte Funktionssicherheit gewährleistet. Erschütterungen haben daher auf die Niveauregelung keinen Einfluß, weil der erste ausgelöste Schaltbefehl sich anschließend selbst hält.

Weitere vorteilhafte Ausgestaltungen der Erfindung sind in den Unteransprüchen gekennzeichnet.

Die Erfindung wird anhand der beiliegenden Zeichnung näher erläutert; es zeigt

Fig. 1 das Heck eines Lastfahrzeugs mit einer Ladevorrichtung,

Fig. 2 ein in ein Schaltgehäuse eingesetzter Quecksilberschalter,

Fig. 3 eine Steuerschaltung und

Fig. 4 einen Hydraulikschaltplan.

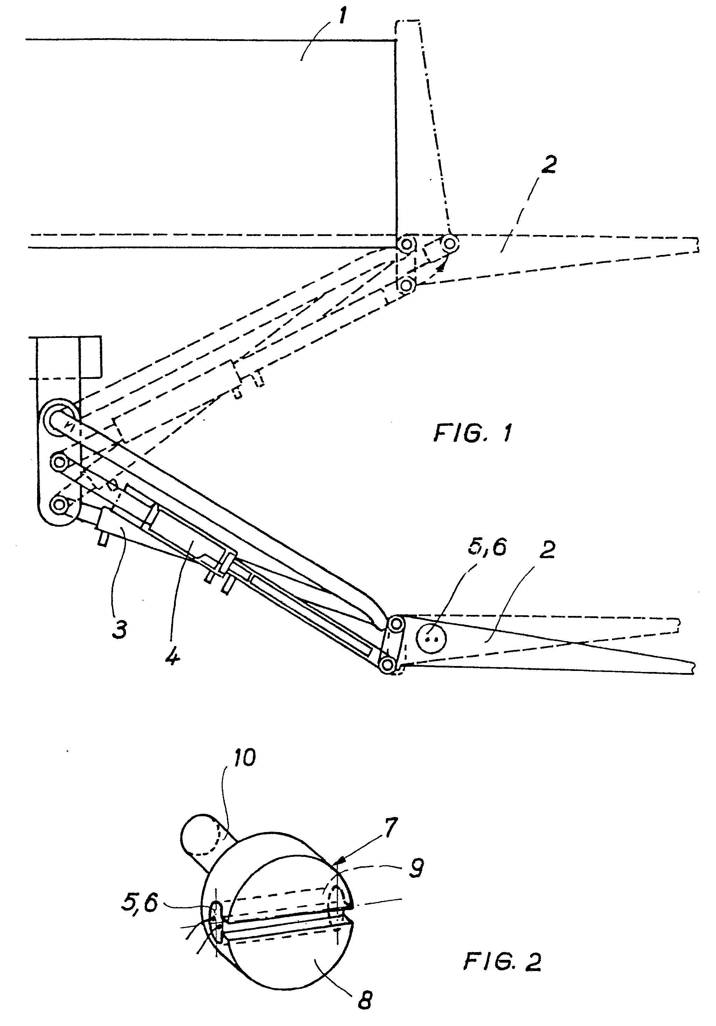

In der Darstellung nach Fig. 1 ist das Heck eines Lastfahrzeugs 1 zu sehen, dessen Heckklappe die Ladebrücke 2 einer Ladevorrichtung bildet. Diese Ladebrücke 2 kann mit Hilfe eines aus einem Hubzylinder 3 und einem Kippzylinder 4 bestehenden hydraulischen Antrieb, wie gestrichelt angedeutet, abgesenkt, angehoben und gekippt werden. In der Ladebrücke 2 sind dabei zwei Quecksilberschalter 5, 6 angeordnet, die — wie Fig. 2 zeigt — jeweils in ein Schaltergehäuse 7 eingesetzt sind. Das Schaltgehäuse 7 besteht aus einem zylinderförmigen Körper 8 mit einer Querbohrung 9 zur formschlüssigen Aufnahme eines Quecksilberschalters 5, 6. Außerdem ist an dem Körper 8 ein koaxialer Befestigungsstutzen 10 vorgesehen, der durch einfaches Drehen des Körpers 8 den jeweils eingestellten Schaltpunkt durch Festklemmen zu arretieren gestattet. Auf diese Weise ist es möglich, für das Auslösen der Schaltbefehle einen weiten Einstellbereich zu erzielen.

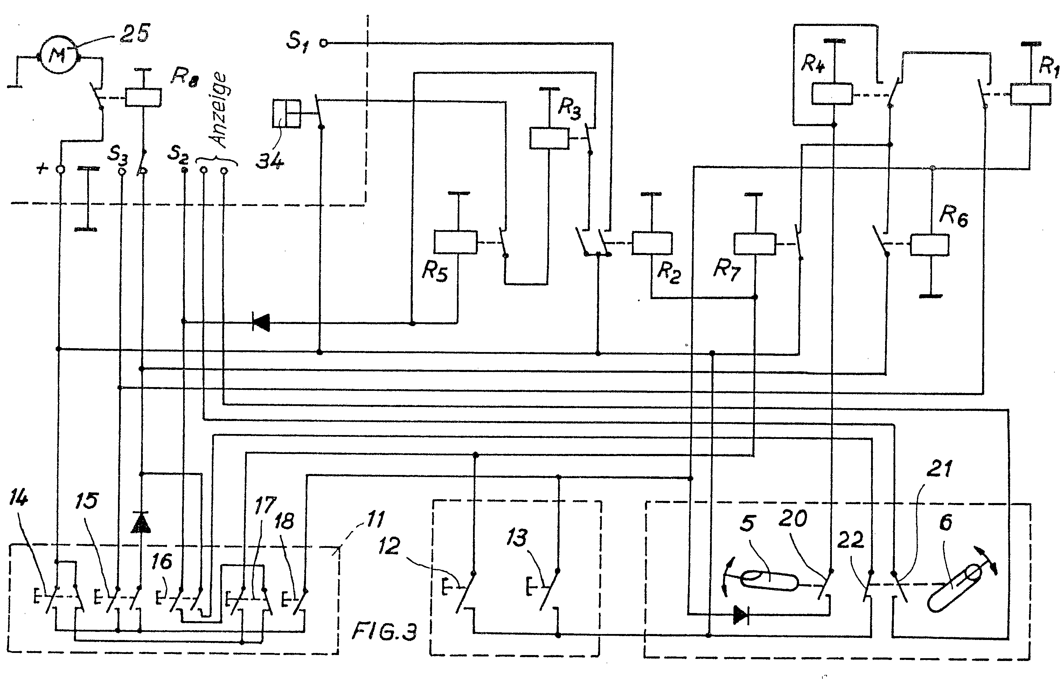

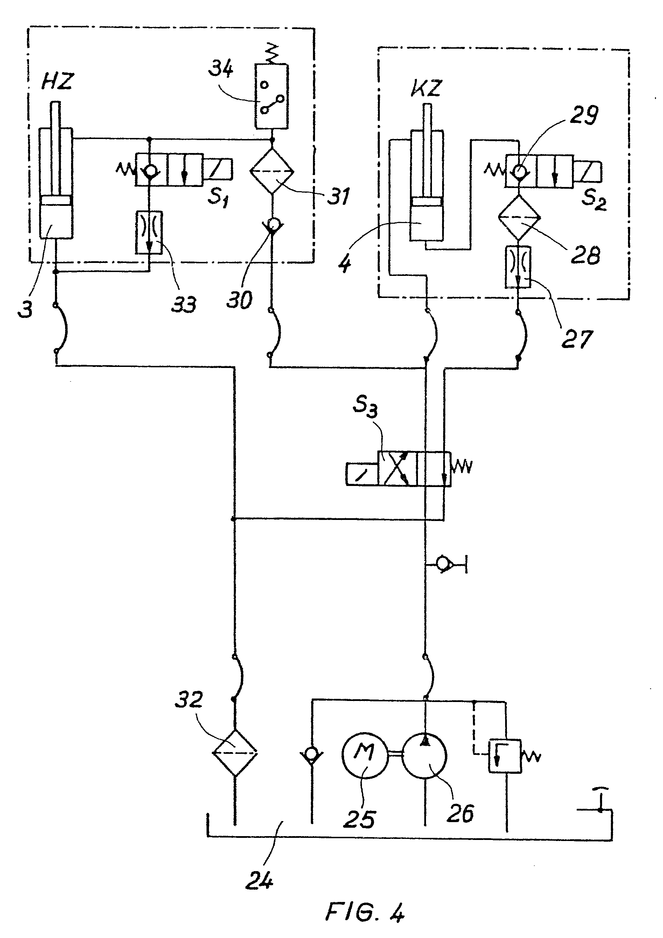

Zur Steuerung des hydraulischen Antriebs dient die Steuerschaltung nach Fig. 3, welche sowohl durch Tastenschalter 11 als auch durch zwei auf der Ladebrücke angeordnete Fußschalter 12, 13 bedient werden kann, wobei der Tastenschalter 11 aus fünf Einzeltasten 14, 15, 16, 17 und 18 besteht. Neben diesen Schaltern wird die Steuerschaltung noch durch den aus einem Arbeitskontakt 20 bestehenden Quecksilberschalter 5 und den aus einem Arbeitskontakt 21 und einem Ruhekontakt 22 bestehenden Quecksilberschalter 6 beeinflußt. In der Steuerschaltung sind sieben Relais $R_1 \ldots R_7$ vorgesehen, deren Kontakte je nach gedrückter Taste oder Fußschalter die gewünschte Steuerfunktion schalten. Ein weiteres Relais $R_8$, das außerhalb der Steuerschaltung liegt, schaltet mit seinem Arbeitskontakt den Antriebsmotor 25 der Hydraulikpumpe 26 (vgl. Fig. 4) ein.

Die Steuerung der Ladevorrichtung arbeitet wie folgt: Bei einem Hubvorgang der Ladebrücke 2 aus der zum Boden geneigten Stellung ist es erforderlich, entweder den Fußschalter 13 oder die Tasten 14 und 18 zu drücken. Hierdurch werden die parallel liegenden Relais $R_1$ und $R_6$ erregt und damit das Relais $R_8$, und zwar über den Arbeitskontakt von $R_6$, eingeschaltet, sowie der Ausgang $S_3$ angesteuert. Das Relais $R_8$ schaltet mit seinem Arbeitskontakt den Motor 25 der Hydraulikpumpe 26 ein, während der Ausgang $S_3$ (vgl. Fig. 4) das Ventil $S_3$ erregt und dieses aus der dargestellten Ruhestellung in die Arbeitsstellung verstellt. Das hat zur Folge, daß dem Kippzylinder 4 über eine Drossel 27, ein Filter 28 und ein im Ventil $S_2$ vorgesehenes Rückschlagventil 29 Drucköl zugeführt wird, wodurch der Kippzylinder 4, dessen andere Seite über das Ventil $S_3$ am Reservoir 24 liegt, die zum Boden geneigte Ladebrücke 2 aufrichtet. In der Ladebrücke 2 ist aber der Quecksilberschalter 5 angeordnet und so eingestellt, daß sein durch Schließen des Arbeitskontaktes 20 entstehender Schaltbefehl dann ausgelöst wird, wenn die Ladebrücke 2 die gestrichelt angedeutete waagerechte Position erreicht hat. Mit dem Schließen des Arbeitskontaktes 20 wird das Relais $R_4$ erregt, das mit seinem Umschaltkontakt einerseits eine Selbsthaltung bewirkt und andererseits den Ausgang $S_3$ für das Ventil $S_3$ abschaltet. Das Relais $R_4$ hält sich dabei über die Arbeitsstellung des eigenen Kontaktes und die Ruhestellung des Kontaktes von $R_7$ zum positiven Betriebspotential.

Die Selbstschaltung von $R_4$ hat zur Folge, daß mit dem ersten Schaltbefehl (Schließen des Kontaktes 20) des Quecksilberschalters 5 nachfolgende kurzzeitige Unterbrechungen, die aus verschiedenen Gründen möglich sind, ohne Einfluß auf die Steuerschaltung bleiben.

Mit der Erregung von $R_4$ wurde aber, wie bereits erwähnt, der Ausgang von $S_3$ abgeschaltet, so daß das Ventil $S_3$ in die dargestellte Ruhestellung zurückgeht. Das Relais $R_8$ bleibt aber weiter, und zwar über Ruhekontakt von $R_7$ und den Arbeitskontakt von $R_6$ erregt, so daß das Hydrauliköl nun dem Hubzylinder 3 zugeführt wird. Der Kippzylinder 4 hält dabei seine Stellung, da das Rückschlagventil 29 ein Entweichen des Drucks verhindert. In dieser Schaltstellung wird daher dem Hubzylinder 3 Drucköl von der Pumpe 26 über das Ventil $S_3$, ein Rückschlagventil 30 und ein Filter 31 zugeführt, wobei die andere Seite des Hubzylinders 3 über ein Filter 32 direkt am Reservoir 24 liegt. Wird der Hubvorgang unterbrochen und/oder öffnet z. B. der Kontakt 20 des Quecksilberschalters 5 z. .B. durch Erschütterung, dann kann durch Drücken des Fußschalters 13 oder der Tasten 14 und 18 der Ausgang $S_3$ nicht mehr angesteuert werden, und der Hubvorgang läuft normal weiter. Zum Schließen der Ladebrücke 2, und zwar, nachdem das Ladegut in das Lastfahrzeug 1 verbracht wurde, werden die Tastschalter 14 und 15 gleichzeitig gedrückt. Dadurch werden die Ausgänge $S_3$ und $R_8$ wieder angesteuert und das Ventil geht in seine Arbeitsstellung. Der Kippzylinder 4 erhält wieder über die Drossel 27, das Filter 28 und das Rückschlagventil 29 Drucköl und bewirkt das Schließen der Ladebrücke 2. In der Schließstellung bzw. in der angehobenen Stellung erreichen der Hubzylinder und der Kippzylinder ihre jeweilige Endstellung und verhindern somit durch eine weitere Ansteuerung dieser Zylinder eine Beschädigung. Das Lösen der Tasten 14 und 15 hat den Abfall der erregten Relais zur Folge. Zum Heben und Schließen ist es notwendig, jeweils zwei Tasten zu betätigen, wodurch einer Sicherheitsvorschrift Genüge getan wird.

Der umgekehrte Arbeitsvorgang der Ladebrücke 2, und zwar Öffnen und Senken, verläuft wie folgt: Zum Öffnen wird die Taste 16 gedrückt, wodurch der Ausgang $S_2$ und das Relais $R_8$ erregt bzw. angesteuert werden. Hierbei wird positive Betriebsspannung über den Ruhekontakt der Taste 14 und den Ruhekontakt der Taste 17 dem linken Arbeitskontakt der Taste 16 zugeleitet, welche die Betriebsspannung dem Ausgang $S_2$ zuführt. Das Relais $R_8$ zum Einschalten des Motors 25 wird dagegen über den Ruhekontakt 22 des Quecksilberschalters 6 und den rechten Arbeitskontakt der Taste 16 erregt. Mit der Ansteuerung des Ventils $S_2$ geht dieses in seine Arbeitsstellung, wodurch, da das Ventil $S_3$ sich in der Ruhestellung befindet, dem Kippzylinder 4 Drucköl jetzt auf seiner anderen Arbeitsseite zugeführt wird. Die zweite Seite des Kippzylinders 4 ist hierbei über das Filter 28, die Drossel 27 und das Ventil $S_3$ mit dem Reservoir 24 verbunden. Der motorisch gesteuerte Kippvorgang der Ladebrücke 2 beim Öffnen geht so lange, bis der Ruhekontakt 22 des Quecksilberschalters 6 öffnet. Die Einstellung des Quecksilberschalters 6 wird zweckmäßigerweise so vorgenommen, daß die Kontaktöffnung des Ruhekontaktes 22 erfolgt, bevor die Ladebrücke 2 eine waagerechte Stellung erreicht hat. Das Öffnen des Ruhekontaktes 22 hat dann den Abfall des Relais $R_8$ zur Folge und beendet damit den motorischen Kippvorgang. Die Ladebrücke 2 bewegt sich dann aufgrund der Schwerkraft weiter, bis durch Lösen der Taste 16 die gewünschte Stellung erreicht und gehalten wird. Mit dem Lösen der Taste 16 wird das Ventil $S_2$ wieder abgeschaltet und damit eine Blockierung der Ladebrücke 2 in der waagerechten Position aufgrund der Ruhestellung von $S_2$ erzielt. Das nachfolgende Sinken der Ladebrücke 2 kann entweder durch Drücken der Taste 17 oder des Fußschalters 12 befohlen werden. Hierbei wird das Relais $R_7$ erregt, das mit seinem Ruhekontakt die Zuführung positiver Betriebsspannung zum Umschaltekontakt das Relais $R_4$ unterbricht. Mit dem Einschalten des Relais $R_7$ wird aber gleichzeitig auch das Relais $R_2$ erregt. Dieses Relais $R_2$ besitzt einen Doppel-Arbeitskontakt und schaltet damit einerseits Betriebsspannung zum Ausgang $S_1$ und andererseits auf den Ruhekontakt des Relais $R_3$. Das Relais $R_3$ ist aber erregt, und zwar über den Ruhekontakt des Relais $R_5$, so daß der Ausgang $S_2$ nicht angesteuert werden kann. Mit dem Ansteuern von $S_1$ wird aber das Ventil $S_1$ erregt und in seine Arbeitsstellung verstellt, in welcher aus dem Hubzylinder 3 über eine Drossel 33 und das Ventil $S_1$ Drucköl entweichen kann. Das hat zur Folge, daß die Ladebrücke 2 aufgrund ihres Eigengewichtes bzw. von Ladegut in waagerechter Lage mit einer von der Bemessung der Drossel 33 abhängigen Geschwindigkeit zum Boden absinkt.

Beim Berühren des Bodens wird infolge von Druckabfall ein Druckschalter 34 aktiviert und damit ein Ruhekontakt geöffnet, der damit den Stromkreis für das Relais $R_3$ unterbricht. Dadurch schließt aber der Ruhekontakt dieses $R_3$-Relais und als Folge davon werden sowohl der Ausgang $S_2$ als auch das $R_5$-Relais angesteuert. Mit der Ansteuerung des Ausganges $S_2$ geht das Ventil $S_2$ in seine Arbeitsstellung, wodurch der Kippzylinder 3 überbrückt wird und die Ladebrücke 2 sich aufgrund ihres Eigengewichtes zum Boden neigt. Die Ansteuerung des Relais $R_5$ verhindert, daß der Druckschalter 34 aufgrund von Bewegungen des Lastfahrzeuges mit seinem wieder schließenden Ruhekontakt den Vorgang der Bodenneigung unterbricht. Diese Steuerungsart hat den Vorteil, daß die Ladebrücke 2 nach dem Auflegen gegen den Boden oder eine Rampe nicht beschädigt werden kann.

Der Arbeitskontakt 21 des Quecksilberschalters 6 schließt beim Öffnen, und zwar dann, wenn der Ruhekontakt 22 dieses Quecksilberschalters öffnet. Dieser Schaltbefehl dient zum Anzeigen bzw. Warnen, wenn die Ladebrücke 2 geöffnet ist und kann im Führerhaus eines Lastfahrzeuges zur Auslösung der zuvor angegebenen Anzeige benutzt werden. Die erfindungsgemäße Niveauregelung hat den Vorteil, daß die Steuerung von der jeweiligen Bodenneigung unabhängig ist, da die gewünschten Schaltbefehle stets in der waagerechten oder jeweils gewünschten eingestellten Lage ausgelöst werden. Aufgrund der Selbsthaltefunktion des Relais $R_4$ bleibt dieses Relais stets vom ersten Schaltbefehl an erregt und gewährleistet damit eine von Erschütterungen unabhängige funktionssichere Niveauregelung. Der Quecksilberschalter 6, der den Ruhekontakt 22 und den Arbeitskontakt 21 umfaßt, enthält dabei zwischen diesen Kontakten eine mit einer Öffnung versehene Prallplatte. Diese Prallplatte verhindert einerseits Störungen aufgrund von Erschütterungen und erfüllt damit praktisch eine Selbsthaltefunktion und gestattet durch die Öffnung andererseits, daß der Quecksilbertropfen vom Ruhe- zum Arbeitskontakt und umgekehrt wandern kann. Für die in der Steuerschaltung eingesezten Schaltstufen können selbstverständlich auch kontaktlose Schalter eingesetzt werden.

## Patentansprüche

1. Ladevorrichtung für Lastfahrzeuge mit einem steuerbaren hydraulischen Antrieb (3, 4) zum Heben, Senken, Öffnen und Schließen der Ladebrücke (2) sowie mit einer von an der Ladebrücke (2) vorgesehenen Quecksilberschaltern (5, 6) beeinflußbaren Steuerschaltung zur Niveauregelung der Ladebrücke, dadurch gekennzeichnet, daß die Quecksilberschalter (5, 6) mit weitem Bereich lageverstellbar angeordnet sind und daß ein Quecksilberschalter (5) mit seinem lageabhängigen Schaltbefehl (20) eine mit einer Selbsthaltefunktion versehene Schaltstufe ($R_4$) zur Umschaltung eines im hydraulischen Antrieb vorgesehenen Ventils ($S_3$) ansteuert, wobei jeweils nur der erste Schaltbefehl des Quecksilberschalters (5) den hydraulischen Antrieb ansteuert und weitere Schaltungen des Quecksilberschalters ohne Einfluß auf die Steuerschaltung bleiben.

2. Ladevorrichtung nach Anspruch 1, dadurch gekennzeichnet, daß ein zweiter in der Ladebrücke (2) vorgesehener Quecksilberschalter (6) mit seinem Schaltbefehl (22) eine Schaltstufe ($R_8$) zur Abschaltung der hydraulischen Versorgung ansteuert.

3. Ladevorrichtung nach Anspruch 1, dadurch gekennzeichnet, daß für die mit der Selbsthaltefunktion versehene Schaltstufe ein Relais ($R_4$) mit einem Umschaltekontakt vorgesehen ist, der in der Ruhestellung ein Ventil ($S_3$) ansteuert zur Versorgung eines hydraulischen Kippzylinders (4) der Ladebrücke (2) und in der Arbeitsstellung das Ventil ($S_3$) abschaltet und den Stromkreis zum Selbsthalten des Relais ($R_4$) schließt.

4. Ladevorrichtung nach Anspruch 1 oder 2, dadurch gekennzeichnet, daß der in der Ladebrücke (2) vorgesehene Quecksilberschalter (6) mit einem Ruhekontakt (22) und einem Arbeitskontakt (21) versehen ist und daß der Arbeitskontakt (21) zur lageabhängigen Ansteuerung einer Warn- und Anzeigevorrichtung dient.

5. Ladevorrichtung nach einem der Ansprüche 1 bis 4, dadurch gekennzeichnet, daß die Quecksilberschalter (5, 6) in eine Bohrung (9) eines Schaltergehäuses (7) formschlüssig einsteckbar sind, das mit einem Befestigungsstutzen (10) in weitem Bereich lageeinstellbar in der Ladebordwand (2) angebracht ist.

## Claims

1. Loading device for lorries with a controllable hydraulic drive (3, 4) for lifting, lowering, opening and closing of the loading platform (2) as well as with a control circuit that can be influenced via mercury switches (5, 6) provided on the loading platform for level control of the loading platform, characterized by the fact that the mercury switches (5, 6) are arranged to be position-adjustable over a wide range and that one mercury switch (5) actuates, with its position-dependent switching command (20), a switching circuit ($R_4$) provided with a self-holding function for change-over of a valve ($S_3$) provided in the hydraulic drive; in each case, only the first switching command of the mercury switch (5) actuates the hydraulic drive while further switchings of the mercury swith do not affect the control circuit.

2. Loading device as per claim 1, characterized by the fact that a second mercury switch (6) provided on the loading platform (2) actuates, with its switching command (22), a switching circuit ($R_8$) for cut-off of the hydraulic supply.

3. Loading device as per claim 1, characterized by the fact that a relay ($R_4$) with a two-way contact is used for the switching circuit provided with the self-holding function; in its off-position, the two-way contact actuates a valve ($S_3$) for the supply of a hydraulic tipping cylinder (4) of the loading platform (2) and, in its on-position, it switches off the valve ($S_3$) thus closing the circuit for self-holding of the relay ($R_4$).

4. Loading device as per claim 1 or 2, characterized by the fact that the mercury switch (6) provided on the loading platform (2) is equipped with a normally-closed contact (22) as well as a normally-open contact (21) and that the normally-open contact is used for position-dependent actuation of a warning and indicating instrument.

5. Loading device as per one of the claims stated under 1 to 4, characterized by the fact that the mercury switches (5, 6) can be positively inserted into the hole (9) of a switch case (7) which is attached to the loading platform (2) by means of a connecting piece (10) and is position-adjustable over a wide range.

## Revendications

1. Dispositif de chargement pour véhicules de transport avec un système d'entraînement hydraulique contrôlable (3, 4) pour le levage, l'abaissement, l'ouverture et la fermeture de la plate-forme de chargement (2) comportant également un circuit de commande destiné au réglage de niveau de la plate-forme de chargement et sensible aux interrupteurs à mercure (5, 6) installés dans la plate-forme de chargement (2), caractérisé par la disposition des interrupteurs à mercure (5, 6) permettant un déplacement dans un large rayon et par le mode de fonctionnement d'un interrupteur à mercure (5) qui, avec son ordre de couplage (20) dépendant de la position, actionne un circuit de couplage ($R_4$) à auto-maintien pour effecteur l'inversion d'une soupape ($S_3$) faisant partie de l'entraînement hydraulique. Seul le premier ordre de couplage de l'interrupteur à mercure (5) sert à actionner l'entraînement hydraulique, tout couplage ultérieur de l'interrupteur à mercure restant sans influence sur le circuit de commande.

2. Dispositif de chargement suivant revendication 1, caractérisé par le fait qu'un deuxième interrupteur à mercure (6) installé dans la plate-forme de chargement (2) actionne, avec son ordre de couplage (22), un circuit de couplage ($R_8$) pour effecteur l'arrêt de l'alimentation hydraulique.

3. Dispositif de chargement suivant revendication 1, caractérisé par le fait que le circuit de couplage à auto-maintien comporte un relais ($R_4$) avec un contact à permutation qui, en position de repos, actionne une soupape ($S_3$) pour effecteur l'alimentation d'un vérin hydraulique de basculement (4) de la plate-forme de chargement (2) et, en position de travail, coupe l'alimentation de la soupape ($S_3$) et ferme le circuit pour l'auto-maintien du relais ($R_4$).

4. Dispositif de chargement suivant revendication 1 ou 2, caractérisé par le fait que l'interrupteur à mercure (6) installé dans la plate-forme de chargement (2) est pourvu d'un contact de repos (22) et d'un contact de travail (21) et que le contact de travail (21) sert à l'actionnement d'un système de détection et de signalisation, actionnement qui dépend de la position.

5. Dispositif de chargement suivant une des revendications 1 à 4, caractérisé par le fait que les interrupteurs à mercure (5, 6) peuvent être enfichés solidairement dans un alésage (9) d'une boîte d'interrupteur (7) montée dans la plate-forme de chargement (2) à l'aide d'un raccord (10) permettant un déplacement dans un large rayon.

0 031 000

FIG. 1

FIG. 2

FIG.3

FIG. 4